Europäisches Patentamt

European Patent Office

Office européen des brevets

(19)

(11) Veröffentlichungsnummer: **0 094 441**
A1

(12) **EUROPÄISCHE PATENTANMELDUNG**

(21) Anmeldenummer: 82104275.1

(22) Anmeldetag: 15.05.82

(51) Int. Cl.³: **C 03 B 5/42**

(43) Veröffentlichungstag der Anmeldung:
23.11.83  Patentblatt  83/47

(84) Benannte Vertragsstaaten:
AT  BE  CH  DE  FR  GB  IT  LI  NL  SE

(71) Anmelder:  Sorg GmbH & Co. KG
Im Aller 23
D-8770 Lohr/Main(DE)

(72) Erfinder:  Pieper, Helmut
Buchenstrasse 19
D-8770 Lohr/Main(DE)

(74) Vertreter:  Schulze Horn, Stefan, Dipl.-Ing. et al,
Patentanwälte Dipl.-Ing. S. Schulze Horn M.SC. Dr. H.
Hoffmeister Goldstrasse 36
D-4400 Münster(DE)

(54) Glas enthaltender Behälter oder Glas führender Kanal mit Fugenabdichtung.

(57) Glas enthaltender Behälter oder Glas führender Kanal,
wie Glasschmelzofen, Vorherd, Arbeitswanne oder Speiser,
der aus einzelnen Blöcken (2) eines Feuerfest-Materials
besteht, deren Seitenflächen aneinander anliegen und die
von einer Stahlverankerung gehalten und nach außen von
einer Isolation abgedeckt werden, wobei in den Fugen
zwischen den Blöcken (2) eine Schicht aus Glas (1) derart
hoher Viskosität angeordnet ist, daß dieses bei den im
Feuerfest-Material herrschenden Temperaturen plastisch ist.

EP  0  094  441  A1

**Glas enthaltender Behälter oder Glas führender Kanal**
**mit Fugenabdichtung**

Die Erfindung betrifft einen Glas enthaltenden Behälter oder Glas führenden Kanal, wie Glasschmelzofen, Vorherd, Arbeitswanne oder Speiser, der aus einzelnen Blöcken eines Feuerfest-Materials besteht, deren Seitenflächen aneinander anliegen und die von einer Stahlverankerung gehalten und nach außen von einer Isolation abgedeckt werden.

Ein wesentliches Problem beim Bau von Glasschmelzwannen und Speiservorherden ist es, daß, infolge der Verschiebungen der Feuerfest-Materialblöcke, verursacht durch die Längenausdehnung beim Tempern, die Fugen dazu neigen, aufzugehen und so einen Glasaustritt zu begünstigen. Auch durch sorgfältigste Verankerung des Feuerfest-Materials und Anschleifen der den Behälter bildenden Blöcke ist diese Möglichkeit nicht immer mit Sicherheit zu verhindern.

In der Praxis hat es sich weiterhin als unmöglich erwiesen, die Steine direkt gegeneinander (z. B. durch eine Nut-und Feder-Ausbildung) oder indirekt über Anker zu verbinden. Vorteilhafterweise hat es sich aber gezeigt, daß aufgrund des Temperaturabfalls zum äußeren des Ofenmauerwerks etwa austretendes Glas dort erstarrt und die Fugen dabei abdichtet. Nachteilig ist hierbei aber, daß ein entsprechender Temperaturgradient eingestellt werden muß und daß dadurch der Isolation des Ofenkörpers Grenzen gesetzt sind und der Wärmeverlust nicht wie gewünscht minimal eingestellt werden kann.

Die Gefahr des Hindurchtretens von Glas durch Fugen zwischen den Blöcken des Feuerfest-Materials besteht insbesondere in solchen Ofenteilen, bei denen die Isolation des Feuerfest-Materials besonders gut ausgeführt werden muß. Diese Situation ergibt sich insbesondere in den Arbeitswannen, in den Homogenisierungsteilen von Speisern und den Speiser-Vorherden. Bei der wünschenswerten verbesserten Isolierung von ganzen Ofenkörpern kann diese Situation aber auch dort auftreten, wobei der Durchtritt hier besonders gefährlich ist, da ein ganzer Glasschmelzofen auslaufen könnte.

Aufgabe der Erfindung ist es daher, eine Abdichtung für die Fugen von nebeneinander und übereinander liegenden Blöcken des Feuerfestmaterials zu finden, welche hitzebeständig ist, Verschiebungen zwischen den Blöcken aufzunehmen im Stande ist und welche wirtschaftlich aufbringbar und bei den bestehenden Temperaturen während der Lebensdauer des Ofens oder des Vorherdes beständig ist.

Es ist eine weitere Aufgabe der Erfindung, den Kontakt von an das Feuerfest-Material angepreßten Elektroden zu verbessern und gleichzeitig den Zutritt der die Korrosion fördernden Luft zu verhindern. Der elektrische Widerstand zwischen Elektrodenplatten und dem Feuerfest-Material soll dabei verringert werden und die Lebensdauer der Elektroden soll entscheidend erhöht werden.

Diese Aufgabe wird erfindungsgemäß bei einem eingangs genannten Behälter dadurch gelöst, daß in den Fugen zwischen den Blöcken eine Sicht aus Glas sehr hoher Viskosität angeordnet ist, welches bei den im Feuerfest-Material herrschenden Temperaturen plastisch ist.

Zum Abdichten von durch das Zerbrechen von Blöcken entstandenen Fugen kann weiterhin das Glas hoher Viskosität auch die glasabgewandten Flächen der Blöcke aus Feuerfest-Material bedecken. Beim Anbringen von Elektrodenplatten kann das Glas hoher Visosität ebenfalls an der Außenfläche der Blöcke angeordnet sein und darin können Elektrodenplatten einer hochwarmfesten Metallegierung eingebettet sein.

Das Glas weist vorteilhaft eine Temperatur zwischen 1100 und 1300° C auf und besitzt in diesem Bereich eine flache Viskositätskurve und kann folgende Zusammensetzung aufweisen:

| | |
|---|---|
| $SiO_2$ | - 72 - 78 % |
| $Al_2O_3$ | 9 - 11 % |
| $MgO + CaO$ | 6 - 10 % |
| $Na_2O + K_2O$ | 1 - 3 % |
| $B_2O_3$ | 1 - 5 %. |

Speziell kann ein Glas verwendet werden, das folgende Zusammensetzung aufweist:

| | |
|---|---|
| $SiO_2$ | 73 % |
| $Al_2O_3$ | 10 % |
| $B_2O_3$ | 8,5 % |
| $CaO$ | 7,0 % |
| $Na_2O$ | 1,5 %, |

wobei in den Fällen der genannten Zusammensetzungen das Verhältnis von MgO und CaO 4 : 1 beträgt.

Im folgenden wird ein Ausführungsbeispiel der Erfindung anhand einer Zeichnung näher erläutert, welche perspektivisch und im Teilschnitt Blöcke mit dem Glas hoher Viskosität gemäß der Erfindung zeigt.

Das erfindungsgemäße Glas besitzt bei $1300^\circ$ C einen Wert für die Viskosität von log = 4, wobei log in dPa sec. gemessen wird. Das Glas wird feingemahlen aufgebracht und sintert bei der Temperatur von etwa $1200^\circ$ C zusammen und bildet eine undurchlässige Schicht, die während der gesamten Laufzeit der Schmelzwanne oder des Speisers plastisch bleibt und so die Fugen absolut sicher schließt. Beim Bau des Speiservorherdes kann dabei das Glas, welches als Pulver eingebracht wird, nicht nur im Fugenbereich angebracht werden, sondern hüllt das gesamte Feuerfest-Material des Speiservorherdes ein. Die vollkommen geschlossene Glasschicht rund um den Glaskanal bewirkt, daß auch bei einem eventuellen Reißen eines Blocks des Feuerfest-Materials das Glas durch den entstandenen Riß nicht nach außen dringen kann, da ein Ausfließen von der hochviskosen Glasschicht verhindert wird.

Das Glas wird als Glaspulver beim Bau direkt zwischen die Steine, insbesondere auch bei den Horizontalfugen eingestreut, so daß diese nach dem Tempern durch die plastische Glasmasse verklebt sind, wobei die Viskosität des Glases so eingestellt ist, daß das Gewicht der Steine ausreicht, um das überschüssige Glas aus den Fugen herauszudrücken, so daß ein sehr dünner Glasfilm in den Fugen entsteht, der nur die Hohlräume der normalen Unebenheiten ausfüllt.

Zur gleichmäßigen Aufbringung des Glaspulvers kann dieses weiterhin mit einem Kleber aufgeklebt werden. Beim Tempern des Ofens wird der vorzugsweise organische Kleber verdampfen und entweicht, ohne Spuren zu hinterlassen. Die Auftragung des Glaspulvers vor dem Sintern und vor der Erreichung der Plastizität wird dadurch verbessert.

Das erfindungsgemäße Glas hat beispielsweise folgende Zusammensetzung:

| $SiO_2$ | 72 – 78 % |
|---|---|
| $Al_2O_3$ | 9 – 11 % |
| $MgO + CaO$ | 6 – 10 % |
| $Na_2O + K_2O$ | 1 – 3 % |
| $B_2O_3$ | 1 – 5 %. |

Eine spezielle Zusammensetzung mit besonders günstigen Eigenschaften liegt dabei wie folgt vor:

| $SiO_2$ | 73 % |
|---|---|
| $Al_2O_3$ | 10 % |
| $B_2O_3$ | 8,5 % |
| $CaO$ | 7,0 % |
| $Na_2O$ | 1,5 %. |

Dabei beträgt das Verhältnis zwischen MgO und CaO 4 : 1.

Das erfindungsgemäße Glas zum Abdichten von Fugen und Spalten im Feuerfest-Material bzw. zwischen dessen Blöcken vermag auch eine Abdichtung im Vorherdbereich durchzuführen. Gerade in diesem Bereich ist eine Abdichtung besonders wichtig, da sich hier ein Offenlassen der Fugen und das Erstarren lassen des austretenden Glases in den Fugen verbietet, da damit stärkere Temperatur- und Energieverluste im Fugenbereich verbunden ist. Diese stärkeren Energieverluste im Fugenbereich führen zwangsläufig zu Temperatur-Inhomogenitäten im Glas, die gerade im Vorherdbereich oder in Arbeitswannen unbedingt zu vermeiden sind, da eine der vordringlichsten Aufgaben des Vorherdes darin besteht, die Temperaturhomogenität des ausfließenden Glases herzustellen.

Die erfindungsgemäße Fugenabdichtung vermag diese Aufgabe nicht nur besonders gut zu lösen, sondern verbessert auch die Anbringbarkeit und Anwendbarkeit von Plattenelektroden zum Einleiten von elektrischer Energie in das Feuerfest-Material als Leiter. Die Plattenelektroden können zur besseren Verbindung mit dem hochviskosen Glas perforiert sein und die Verwendung des erfindungsgemäßen Glases ermöglicht es, die an das Feuerfest-Material angelegten Elektroden unter gegenüber den bekannten Verhältnissen höheren Temperaturen zu betreiben, wobei durch die geringen Widerstände eine verbesserte Stromleitung gegeben ist. Durch die verbesserte und vergleichmäßigte Stromleitung wird die Bildung von Strombrücken mit einer entsprechenden Temperaturbrücke vermieden, so daß auch das Reißen von Blöcken des Feuerfest-Materials infolge großer Temperaturdifferenzen entfällt. Durch das erfindungsgemäße Glas wird daher die Verwendbarkeit der direkten Durchleitung von elektrischem Strom durch das Feuerfest-Material stark erhöht. Es kann also von einer idealen Lösung der anstehenden Probleme gesprochen werden.

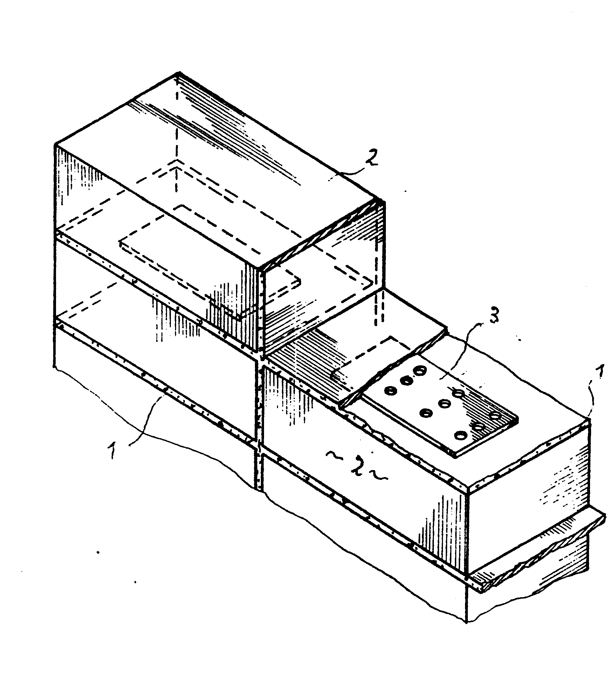

In Betrachtung der Zeichnung ist zu berücksichtigen, daß zur Verdeutlichung die Schichten des Glases hoher Viskosität überhöht dargestellt sind. Der Stromfluß erfolgt für den Fachmann selbstverständlich quer durch die dargestellten Blöcke, das heißt in der Zeichnung von oben zu nicht dargestellten unteren Elektroden.

Bezugszeichenliste

1. Glas hoher Viskosität
2. Block des Feuerfestmaterials
3. Plattenelektroden

Patentansprüche:

1. Glas enthaltender Behälter oder Glas führender Kanal, wie Glasschmelzofen, Vorherd, Arbeitswanne oder Speiser, der aus einzelnen Blöcken eines Feuerfest-Materials besteht, deren Seitenflächen aneinander anliegen und die von einer Stahlverankerung gehalten und nach außen von einer Isolation abgedeckt werden, dadurch gekennzeichnet, daß in den Fugen zwischen den Blöcken eine Schicht aus Glas sehr hoher Viskosität angeordnet ist, welches bei den im Feuerfest-Material herrschenden Temperaturen plastisch ist.

2. Glas enthaltender Behälter oder Glas führender Kanal nach Anspruch 1, dadurch gekennzeichnet, daß das Glas hoher Viskosität an der Außenfläche der Blöcke angeordnet ist und darin Elektrodenplatten einer hochwarmfesten Metallegierung eingebettet sind.

3. Glas enthaltender Behälter oder Glas führender Kanal nach Anspruch 2, dadurch gekennzeichnet, daß die Elektroden von außen von weiteren Blöcken aus Feuerfest-Material angepreßt werden.

4. Glas enthaltender Behälter oder Glas führender Kanal nach einem der Ansprüche 1 bis 3, dadurch gekennzeichnet, daß das Glas eine Temperatur zwischen 1100 – 1300° C aufweist und in diesem Bereich eine flache Viskositätskurve besitzt.

5. Glas enthaltender Behälter oder Glas führender Kanal nach einem der Ansprüche 1 bis 4, dadurch gekennzeichnet, daß das Glas folgende Zusammensetzung aufweist:

| | |
|---|---|
| $SiO_2$ | 72 – 78 % |
| $Al_2O_3$ | 9 – 11 % |
| $MgO + CaO$ | 6 – 10 % |
| $Na_2O + K_2O$ | 1 – 3 % |
| $B_2O_3$ | 1 – 5 %. |

6. Glas enthaltender Behälter oder Glas führender Kanal nach Anspruch 5, dadurch gekennzeichnet, daß das Glas folgende Zusammensetzung aufweist:

| | |
|---|---|
| $SiO_2$ | 73 % |
| $Al_2O_3$ | 10 % |
| $B_2O_3$ | 8,5 % |
| CaO | 7,0 % |
| $Na_2O$ | 1,5 %. |

7. Glas enthaltender Behälter oder Glas führender Kanal nach Anspruch 5 oder 6, dadurch gekennzeichnet, daß das Verhältnis von MgO und CaO 4 : 1 beträgt.

8. Glas enthaltender Behälter oder Glas führender Kanal nach Anspruch 2 oder 3, dadurch gekennzeichnet, daß die Elektrodenplatten perforiert sind.

9. Glas enthaltender Behälter oder Glas führender Kanal nach Anspruch 2, 3 oder 8, dadurch gekennzeichnet, daß dem Glas Lithium-Karbonat zugesetzt wird.

# EUROPÄISCHER RECHERCHENBERICHT

**0094441**
Nummer der Anmeldung

EP 82 10 4275

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | C 03 B 5/42 |
| X | GB-A-1 246 663 (NATIONAL RESEARCH DEVELOPMENT) * ganzes Dokument * | 1 | |
| | --- | | |
| X | US-A-2 299 084 (FERNGREN) * Figur 3; Seite 4, linke Spalte, Zeilen 49-56 * | 1 | |
| | --- | | |
| A | DE-C- 683 220 (CORHART REFRACTORIES) * ganzes Dokument * | 1 | |
| | ----- | | |

**RECHERCHIERTE SACHGEBIETE (Int. Cl. ³)**

C 03 B 5/00
C 03 C 3/00

Der vorliegende Recherchenbericht wurde für alle Patentansprüche erstellt.

| Recherchenort | Abschlußdatum der Recherche | Prüfer |
|---|---|---|
| DEN HAAG | 14-01-1983 | VAN DEN BOSSCHE W.L. |